# EUROPÄISCHE PATENTANMELDUNG

(11) **EP 1 261 162 A1**
(43) Veröffentlichungstag der Anmeldung: **27.11.2002**
(21) Anmeldenummer: 02100506.1
(22) Anmeldetag: 17.05.2002
(51) Int. Cl.: H04L 1/18, H04L 25/14

(54) **Verfahren und Vorrichtung zur Mehrkanal-stop-and-wait-arq-Kommunikation**

(30) Priorität: 21.05.2001 DE 10124812
(71) Anmelder: SIEMENS AKTIENGESELLSCHAFT, 80333 München (DE)
(72) Erfinder: Beckmann, Mark, 38102 Braunschweig (DE); Eckert, Michael, 38122 Braunschweig (DE); Hans, Martin, 31139 Hildesheim (DE); Kroth, Norbert, 14471 Potsdam (DE); Otte, Andreas, 29227 Celle (DE); Raji, Fariba, 01200 Wien (AT)

(57) **Zusammenfassung**

Die vorliegende Erfindung betrifft ein Verfahren zur Übersenden einer Information, eine dementsprechende Vorrichtung, ein Teilnehmer-Endgerät und ein Kommunikationssystem.

Um ein Verfahren, eine Vorrichtung, ein Teilnehmer-Endgerät und ein Kommunikationssystem zu schaffen, bei denen eine zu verarbeitende Datenmenge gesenkt und damit eine effektive Kanalausnutzung verbessert wird, wird vorgeschlagen, daß die Sendedatenpakete SDP bei der Empfangseinheit RU solange zwischengespeichert werden, bis alle Sendedatenpakete SDP, die vor einem jeweiligen noch zu empfangenen Sendedatenpaket SDPⱼ liegen, erfolgreich empfangen worden sind.

## Beschreibung

Die vorliegende Erfindung betrifft ein Verfahren zur Übersenden einer Information, eine dementsprechende Vorrichtung, ein Teilnehmer-Endgerät und ein Kommunikationssystem.

Unter dem Begriff der Information wird im Rahmen der vorliegenden Erfindung jede Form von Daten verstanden, die leitungs- oder paketvermittelt oder in sonstiger Weise organisiert übertragen werden.

Innerhalb eines Datenübertragungssystems werden zumeist Datenpakete in einer bestimmten Sendereihenfolge von einer Sendeeinheit zu einer Empfangseinheit übermittelt. Die Übertragung findet dabei über einen Übertragungskanal statt, der aufgrund seiner Eigenschaften die in den Datenpaketen enthaltenen Informationen im allgemeinen verändern bzw. verfälschen kann. Im Empfänger sind daher Mechanismen enthalten, die es ihm ermöglichen die durch den Übertragungskanal veränderten Datenpakete zu detektieren und, soweit eine Reparatur nicht möglich ist, zu zerstören, wodurch die Daten im Empfänger zur weiteren Verarbeitung fehlen. Wenn im Empfänger das Fehlen von Informationen jedoch nicht akzeptabel ist, kann der Empfänger üblicherweise vom Sender eine wiederholte Übertragung des als fehlerhaft detektierten Pakets anfordern. Dies geschieht dadurch, daß der Empfänger dem Sender für jedes empfangenen Datenpaket mitteilt, ob es fehlerfrei oder verfälscht empfangen wurde. Erreicht den Sender die Mitteilung, daß ein bestimmtes Datenpaket fehlerhaft übertragen wurde, so überträgt er automatisch eine Kopie des zuerst gesendeten Pakets noch mal. Dieses wiederholte Übertragen von falsch empfangenen Datenpaketen wird als "Automatic Repeat Request" (ARQ) bezeichnet. Daß das falsch empfangene Datenpaket dabei im Empfänger einfach zerstört wird bezeichnet man im allgemeinen als "Hybrid ARQ Type I", HARQ Type I. Wird ein fehlerhaftes Datenpaket hingegen im Empfänger zwischengespeichert, um es mit wiederholt gesendeten Kopien des Datenpakets, die auch wiederum nicht fehlerfrei detektiert werden konnten, zu einem fehlerfreien Datenpaket zu kombinieren, spricht man von HARQ vom Type II und Type III. In dem im Rahmen des 3rd Generation Partnership Project 3GPP entstandenen Technischen Report TR 25.835, Report on Hybrid ARQ Type II/III aus dem September 2000 Seite 8 ff sind die drei erwähnten HARQ Verfahren ausführlich beschrieben.

Generell setzt das ARQ Verfahren jedoch voraus, daß von jedem gesendeten Datenpaket solange eine Kopie in einem Speicher der Sendeeinheit gespeichert ist, bis das Datenpaket erfolgreich übertragen wurde, oder der Versuch der erfolgreichen Übertragung nach einer bestimmten Anzahl von nicht erfolgreichen Übertragungen aufgegeben wird. Somit ist sichergestellt, daß in der Sendeeinheit die vom Empfänger wiederholt angeforderten Informationen überhaupt zur Verfügung stehen. Wurde ein Paket erfolgreich übertragen, wird in der Sendeeinheit die Kopie des Pakets aus dem Speicher gelöscht.

Der Empfänger hat dabei zwei Möglichkeiten das Übertragungsergebnis eines Datenpakets der Sendeeinheit mitzuteilen. Zum einem kann er in bestimmten Zeitabständen die Übertragungsergebnisse von einem oder mehreren Datenpaketen dem Sender in einer Nachricht übermitteln und dabei explizit die entsprechenden Datenpakete referenzieren. In dieser Nachricht ist dann in irgendeiner Weise für jedes Datenpaket, das innerhalb eines bestimmten Zeitraums gesendeten wurde, die Information enthalten, ob die Übertragung fehlerfrei war oder nicht. Damit die einzelnen Datenpakete für den Sender eindeutig zu identifizieren sind, wird bei dieser Möglichkeit den Datenpaketen eine Sequenznummer SN als explizite Referenz in einem Kontrolldatenkopf voran gestellt. Anhand dieser kann der Sender die Datenpakete eindeutig identifizieren und somit gegebenenfalls eine wiederholte Übertragung der entsprechenden Datenpakete vornehmen bzw. bereits erfolgreich übertragenen Datenpakete aus dem Speicher löschen. Ferner wird dem Empfänger anhand der SN die Fähigkeit gegeben, wiederholt gesendete Datenpakete von erstmals gesendeten zu unterscheiden. Nachteil dieses Verfahrens ist, daß durch die Übertragung einer SN weniger Nutzdaten übertragen werden können und somit die Nutzdatenrate sinkt bzw. die benötigte Bandbreite für eine bestimmte Nutzdatenrate steigt. Das hier beschriebene Verfahren wird im allgemeinen als "Selective Repeat Automatic Repeat Request" SR ARQ bezeichnet, weil nur die vom Empfänger als fehlerhaft gekennzeichneten Datenpakete noch mal übertragen werden.

Eine andere Möglichkeit, dem Sender das Übertragungsergebnis für ein gesendetes Datenpaket mitzuteilen, besteht darin, dieses in bestimmten Zeitabständen für einen oder mehrere Datenpakete in einer Nachricht zu übermitteln, in der die entsprechenden Datenpakete implizit referenziert werden. Beispielsweise kann der Empfänger das Übertragungsergebnis jedes einzelnen Datenpakets sofort nach dem Empfang und der Kontrolle, ob das Paket fehlerhaft ist oder nicht, zur Sendeeinheit übermittelt. Der Sender hingegen wartet nach dem Senden eines Datenpakets jedesmal auf das Übertragungsergebnis für das entsprechende Datenpaket vom Empfänger. Die implizite Referenzierung der Datenpakete erfolgt dabei durch den zeitlichen Zusammenhang zwischen der Übertragung des Datenpakets und der Übermittlung des Übertragungsergebnisses für das Datenpaket vom Empfänger zum Sender. Der Vorteil dieses Verfahrens liegt darin, daß keine SN für die Übertragung der Datenpakete benötigt wird, da im Sender und Empfänger ein erstmals übertragenes Datenpaket solange wiederholt übertragen bzw. bearbeitet wird, bis es fehlerfrei im Empfänger vorliegt, oder eine maximale Anzahl von wiederholten Übertragungsversuchen erreicht wurde. Somit wissen Sender und Empfänger zu jedem Zeitpunkt ob es sich bei einem übertragenen Datenpaket um ein erstmals gesendetes oder ein wiederholt gesendetes Datenpaket handelt. Der Nachteil dieses Verfahrens ist allerdings, daß die Übertragungskapazitäten der Übertragungsstrecke nur schlecht ausgenutzt werden, weil der Sender in dem Zeitraum zwischen dem Senden eines Datenpakets und dem Empfang des Übertragungsergebnisses für dieses Datenpaket keine weiteren Datenpakete zum Empfänger sendet. Der Sender unterbricht also nach jedem gesendeten Datenpaket die Übertragung und wartet auf das Übertragungsergebnis vom Empfänger, um entscheiden zu können, ob ein neues Datenpaket oder eine Kopie des zuvor gesendeten Datenpakets zum Empfänger gesendet werden muß. Aus diesem Grund wird dieses Verfahren auch als "Stop and Wait Automatic Repeat Request" S&W ARQ bezeichnet.

Aus dem ebenfalls im Rahmen des 3rd Generation Partnership Project 3GPP entstandenen Technischen Report TR 25.950, UTRA High Speed Downlink Packet Access vom März 2001, Seiten 13-17, ist ein "N-Channel S&W ARQ" Verfahren bekannt, daß den zuvor beschriebenen Nachteil des herkömmlichen S&W ARQ Verfahrens behebt. Der Namensbestandteil "N-Kanal" weist hierbei auf die Verwendung eines Datenübertragungskanals bei Aufteilung in eine in der Regel geradzahlige Anzahl von Unter-Kanälen hin, die jeweils einen Sender mit einem Empfänger zur Übertragung eins Sendedatenpakets verbinden. Über einen Rückkanal wird auf einen Empfang und dessen Auswertung hin ein Quittungssignal von dem Empfänger an den Sender rückübermittelt. Während zu versendende Daten in einer Sendeeinheit nach einem first in-first out Prinzip versendet werden, ist es möglich, daß diese Datenpakete jedoch auf der Empfängerseite nicht in dieser Reihenfolge eintreffen. Diese Reihenfolge kann durch folgende Faktoren geändert werden: Eine fehlerhafte Übertragung eines Datenpakets löst bis zur erfolgreichen Übertragung Retransmissions-Vorgänge aus, so daß das Datenpaket erst zeitlich wesentlich verzögert eintrifft. Eine Änderung der senderseitig vorgegebenen Reihenfolge der Datenpakete am Empfänger kann auch durch unterschiedlich lange Übertragungswege ausgelöst werden. Eine Veränderung der Sendereihenfolge hat auf der Empfangsseite verschiedene negative Auswirkungen. So können Datenpakete, die außerhalb der Sendereihenfolge korrekt empfangen worden sind, in einer nachfolgenden Verarbeitungsebene trotzdem als Übertragungsfehler interpretiert und folglich im Empfänger zerstört werden.

Die nachfolgende übergeordnete Verarbeitungsschicht erwartet Empfangsdatenpaktete prinzipiell in Sende-Reihenfolge. Wird diese Reihenfolge nicht eingehalten, so muß in verschiedene Betriebsmodi unterschieden werden: Entweder wird die Zerstörung der Datenpakete ohne Ersatz durchgeführt, was eine Erhöhung der Fehlerrate des Systems bewirkt. Zerstörte Pakete können von der übergeordneten Verarbeitungsschicht auch zur Neuübertragung durch den Sender beantragt werden, was den Datenverkehr erheblich steigert. In einem dritten Mode, dem transparent Mode, werden die Daten in der eingespeisten unkorrekten Reihenfolge einfach transparent weiterverarbeitet. Ein Effekt der empfangsseitigen direkten Weiterverarbeitung von außerhalb der Reihenfolge eintreffenden Sendedatenpaketen ist beispielsweise bei voice-over-IP Übertragungen, insbesondere der Internet-Telefonie, bekannt: Die nicht in der korrekten Sendereihenfolge verarbeiteten Datenpakete erzeugen ein relativ hohes Rauschen, das die Verständlichkeit der Sprachsignale signifikant senkt. Alle drei Betriebszustände müssen somit systembedingt mit Nachteilen arbeiten.

Auf den konkreten Aufbau und Verfahrensablauf nach dem vorstehend beschriebenen Stand der Technik wird nachfolgend mit Bezug auf die Zeichnung noch im Detail eingegangen werden.

Der vorliegenden Erfindung liegt die Aufgabe zugrunde, ein Verfahren, eine Vorrichtung, ein Teilnehmer-Endgerät und ein Kommunikationssystem vorzuschlagen, bei denen eine zu verarbeitende Datenmenge gesenkt und damit eine effektive Kanalausnutzung verbessert wird.

Diese Aufgabe wird erfindungsgemäß durch ein Verfahren mit den Merkmalen des Anspruchs 1 und eine Vorrichtung mit den Merkmalen des Anspruchs 11 gelöst. Ferner ist ein Teilnehmer-Endgerät mit den Merkmalen von Anspruch 18 und ein Kommunikationssystem mit den Merkmalen von Anspruch 19 eine Lösung dieser Aufgabe. Die Unteransprüche definieren jeweils bevorzugte und vorteilhafte Ausführungsformen der vorliegenden Erfindung.

Ein erfindungsgemäßes Verfahren zeichnet demnach dadurch aus, daß die Sendedatenpakete bei der Empfangseinheit solange zwischengespeichert werden, bis alle Sendedatenpakete, die vor einem noch zu empfangenen Sendedatenpaket liegen, erfolgreich empfangen worden sind. Damit liegen alle Sendedatenpakete auf der Empfängerseite bis zu dem Zeitpunkt, an dem ein noch ausstehendes und angefordertes Sendedatenpaket erfolgreich übersandt ist oder als endgültig nicht übersandt gilt, in gespeicherter Form vor. Eine nach dem vorstehend beschriebenen Stand der Technik in der Regel vorgesehene Vernichtung zu früh empfangener Sendedatenpakete wird damit unterbunden, so daß in der Folge auch eine erneute Anforderung dieser Sendedatenpakete unterbleibt. Bei erneuter Anforderung fehlerhaft übertragener Datenpakete wird der Datenverkehr auf dem Übertragungskanal gegenüber bekannten Verfahren sehr wesentlich gesenkt.

Schon bei Aufbau eines linearen Speichers, dessen Adressen mit einer zeitlichen Abfolge von Empfängern durch eine einfache Zuordnung verknüpft sind, ist ein Auslesen von Sendedatenpaketen in korrekter zeitlicher Reihenfolge möglich, ohne daß weitere Intelligenz vorgesehen werden muß. Auch muß ein Kontrolldatenkopf oder eine Sequenz-Nummer nicht für jedes Sendedatenpaket im Sender aufgebaut und angehängt werden, so daß der Anteil an Nutzdaten nach einem erfindungsgemäßen Verfahren deutlich steigt. Dabei ist es aber auch vorstellbar, dass der Empfangseinheit eine Information über die zeitliche Abfolge der Sendedatenpakete mitgeteilt wird, um die Sicherheit des erfindungsgemäßen Verfahrens zu erhöhen. Diese Information kann dem Empfänger parallel zu den Sendedatenpaketen auf einen separaten Kanal mitgeteilt werden oder den Sendedatenpaketen in einem Kontrolldatenkopf vorangestellt werden. Eine solche Information könnte z.B. eine Nummer darstellen, welche den entsprechenden Unterkanal identifiziert, über den ein Sendedatenpaket zum Empfänger übermittelt wird. Anhand dieser Nummer wird dem Empfänger unter bestimmten Umständen die Möglichkeit gegeben Fehler in der Übertragungsreihenfolge zu detektieren. Beispielsweise kann der Empfänger anhand dieser Kanalnummer erkennen, ob er mit der Sendeeinheit synchron arbeitet oder nicht. Die für eine solche Kanalnummer benötigte Anzahl von Bits lässt sich nach log₂(N) bestimmen und ist im allgemeinen um ein vielfaches kleiner als die übliche Anzahl der benötigten Bits einer SN, da man in der Praxis von einer Anzahl von Unterkanälen nicht größer acht ausgehen kann und daher eine mit drei Bit kodierte Kanalnummer ausreichend ist.

In Weiterbildungen der Erfindung ist vorgesehen, daß die Sendedatenpakete in Speichern zwischengespeichert werden, die von den jeweiligen Empfängern als direkt zugeordnete Elemente der Empfangseinheit angesprochen werden. Damit ist in einfacher Weise auch eine zeitliche Zuordnung gegeben, da diese Speicher erst ab Auftreten eines Versandfehlers zyklisch aufeinander folgend beschrieben werden. Bildlich gesprochen ergibt sich somit ein spiralförmige Anordnung von Daten, an deren Anfang die Speicherzelle steht, in die ein noch erfolgreich zu übertragendes Sendedatenpaket eingeschrieben werden muß. Mit Abschluß einer erfolgreichen Übertragung, oder aber einem erfolglosen Abschluß der Anzahl zugelassener Retransmissions-Versuche, wird die geordnete Kette von Speicherzellen in zeitlich korrekter Reihenfolge als sequentieller Datenstrom ausgelesen.

Vorteilhafterweise werden die Sendedatenpakete erst mit oder nach einem erfolgreichen Empfang des noch zu empfangenen Sendedatenpaket aus den Speichern und damit aus der Empfangseinheit ausgelesen und somit stets in ihrer korrekten, von der Sendeeinheit zeitlich vorgegebenen Reihenfolge in einer nachfolgenden Schaltung weiterverarbeitet. Fehlende Sendedatenpakete können nach bekannten Codierungen aufgrund dieser korrekten Reihenfolge der übrigen Sendedatenpakete so sehr häufig ergänzt werden, so daß insgesamt kein Datenverlust oder keine nennenswerte Qualitätseinbuße entsteht.

Eine Variation des erfindungsgemäßen Verfahrens zeichnet sich dabei dadurch aus, dass eine übergeordnete Kontrolleinheit in der Sendeeinheit die Kapazitäten des Übertragungskanals für eine oder mehrere Zeitspannen auch einer anderen Empfangseinheit zuweisen kann. D.h. in den entsprechenden Zeitspannen empfängt die ursprünglich betrachtete Empfangseinheit keine Daten. In solch einem Fall muss der gesamte Empfangsablauf in dieser Empfangseinheit lediglich für die entsprechende Dauer angehalten werden. Bei Wiederaufnahme der Datenübertragung zur ursprünglich betrachten Empfangseinheit muss in der Sendeeinheit lediglich gewährleistet sein, dass die Datenübertragung auf dem von der Empfangseinheit erwarteten Unterkanal fortgesetzt wird.

In einer bevorzugten Ausführungsform der Erfindung werden auch während einer Zeitspanne bis zu einem erfolgreichen Empfang des noch zu empfangenen Sendedatenpaket Sendedatenpakete von den übrigen Empfängern empfangen und in den zugehörigen Speichern abgelegt. Der Ablauf eines Retransmissions-Vorgangs senkt die effektive Übertragungsleistung des Datenübertragungskanals damit nicht zu stark. Bei einem aus N=4 Unterkanälen bestehenden Datenübertragungskanal fällt durch einen Retransmissions-Vorgang mithin nur ein Unterkanal aus, die Senkung der Nutzdatenübertragung beträgt damit innerhalb eines Retransmissions-Zyklus also nur 25%. Häufig ist der Übertragungsfehler auch schon innerhalb eines einzigen Retransmissions-Vorgangs behoben, so daß die volle Kapazität des Datenübertragungskanals schon sehr schnell wieder zur Verfügung steht. Ferner wird durch diese Organisation auf der Empfängerseite nicht nur die Zahl von Retransmissions-Vorgängen durch Zwischenspeicherung statt Datenvernichtung gesenkt, es wird auch von der Senderseite keine Änderung einer bekannten Sendedatenorganisation verlangt. Erfindungsgemäße Anpassungen sind mithin nur auf der Empfängerseite erforderlich. Sie werden in Form beispielsweise einer Baugruppe oder einer integrierten Schaltung in einem neuen Teilnehmer-Endgerät verwirklicht, vorzugsweise in Form eines UMTS-Mobilfunktelefons.

Nach einer Weiterbildung der Erfindung werden Informationen über die in den Speichern jeweils abgelegten Sendedatenpakete an einen weiteren Speicher versendet. Dieser Speicher kann ein separater Speicher oder aber in an sich bekannter Weise ein festgelegter Speicherbereich in einem einzigen Speicher sein. Vorteilhafterweise wird dieser Speicher durch einen Multiplexer beschrieben und/oder ausgelesen. So kann der Multiplexer auch bei Auftreten mehrerer Retransmission-Vorgänge die Speicher unter Verwendung der Information aus dem Speicher zur Bildung eines sequentiellen Ausgangssignals mit korrekter von der Sendeeinheit zeitlich vorgegebenen Reihenfolge der Sendedatenpakete auslesen. Eine Kombination vorstehender Merkmale ohne Einsatz eines Multiplexers ist bei geringer Fehlerhäufigkeit einsetzbar, also beispielsweise bei weniger als einem Retransmissionsvorgang bei ca. N Sendedatenpaketen. Dabei bezeichnet N die Zahl der Unterkanäle und mithin auch die Anzahl von Empfängern der Empfangseinheit. Vorzugsweise wäre so ein eindimensionaler Speicher einer Größe 1+(N-1)*R vorzuhalten, der insbesondere nach einer Adressierung sortiert sequentiell mit der zeitlich korrekten Reihenfolge der Datenelemente ausgelesen werden könnte. Dabei gibt R eine zulässige Anzahl von Retransmission-Versuchen an. Mit Einsatz eines Multiplexers können hingegen fast beliebig organisierte Speicher verwendet werden.

Vorteilhafterweise werden die Sendedatenpakete in einer alternativen Ausführungsform gemäß vorliegender Erfindung in einem einzigen Speicher unter Organisation durch einen Multiplexer beschrieben und/oder ausgelesen. Damit muß in einer hybriden Schaltung nur ein Speicherbaustein und ein Multiplexer als Schalter mit Intelligenz und eventuell einem kleinen eigenen Speicher oder Zwischenspeicher vorgesehen werden, um eine im Fall mehrerer gleichzeitig und/oder einander zeitlich überlappend laufender Retransmissions-Vorgänge anfallende Datenorganisation auf der Empfängerseite vornehmen zu können.

Für konkrete Ausgestaltungen und vorteilhafte Nutzungen wird auf die nachfolgende Beschreibung von Ausführungsbeispielen verwiesen.

Um eine zu verarbeitende Datenmenge zu senken und damit eine effektive Kanalausnutzung zu verbessern oder die mögliche Datenrate bei gleichbleibender beanspruchter Bandbreite steigern zu können, wird die Information gemäß vorliegender Erfindung nach einem bekannten Mobilfunk-Standard übersandt. Hohe Datenmengen und diverse Dienste werden zukünftig insbesondere nach dem Universal Mobile Telecommunication System-Standard UMTS versandt werden. Dementsprechend ist in einem Mobilfunksystem nach dem UMTS-Standard ein wesentliches Einsatzgebiet von Ausführungsformen der vorliegenden Erfindung zu sehen. Neben der Einsparung von Übertragungskapazität bzw. verbesserten Ausnutzung wird erfindungsgemäß eine Schonung von Ressourcen bei einem Geschwindigkeitsvorteil gegenüber bekannten Verfahren und entsprechenden Vorrichtungen erreicht.

Die vorliegende Erfindung wird nachfolgend unter Bezugnahme auf die beigefügte Zeichnung anhand bevorzugter Ausführungsbeispiele erläutert.
- Fig. 1: zeigt ein vereinfachtes Blockschaltbild einer UMTS Mobilfunknetzwerkarchitektur nach dem Stand der Technik;
- Fig. 2: stellt ein bekanntes N-Channel S&W ARQ Verfahren schematisch für N=4 SCs in Form eines vereinfachten Blockschaltbilds dar;
- Fig. 3: zeigt einen zeitlichen Ablauf einer Übertragung von vier Sendedatenpaketen über einen Übertragungskanal gemäß Fig. 2 dar;
- Fig. 4: stellt ein Blockschaltbild einer Ausführungsform der Erfindung unter Eingliederung in ein Mobilfunksystem nach dem UMTS-Standard dar und
- Fig. 5: zeigt in Analogie zu Fig. 3 ein Diagramm zur Veranschaulichung des Verlaufs einzelner Signale über der Zeit der Ausführungsform der Erfindung von Fig. 4.

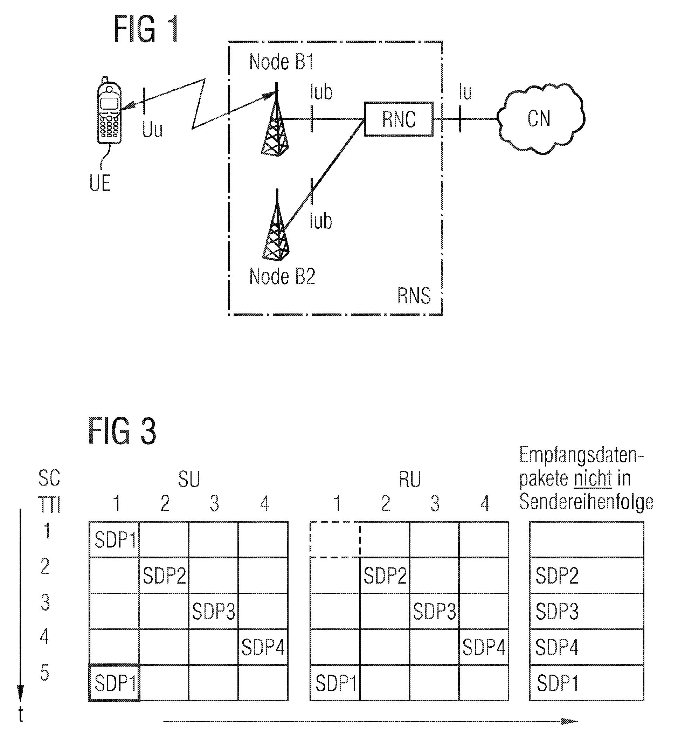

Bei der Darstellung von Fig. 1 handelt es sich um ein vereinfachtes Blockschaltbild, das eine Realisierung einer bekannten Struktur zur Informationsversendung zeigt. Dabei wird eine Nachricht M in Form von Datenpaketen, die von einem Festnetzwerk bzw. Core Network CN oder von einem Radio Network Controller RNC erzeugt werden, über eine Luftschnittstelle Uu an ein Teilnehmer-Endgerät bzw. User Equipment UE übertragen.

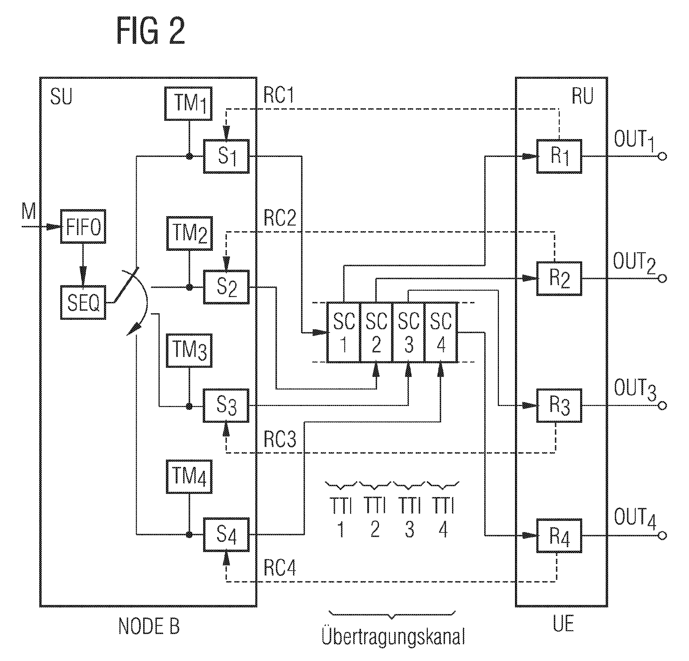

In der Abbildung von Fig. 2 ist ein bekanntes N-Channel S&W ARQ Verfahren schematisch in Form eines vereinfachten Blockschaltbilds dargestellt. Diesem Verfahren ist eine Architektur eines UMTS Mobilfunk-Netzwerks nach Fig. 1 zu Grunde gelegt. Ferner wird für die in dem vorstehend genannten Technischen Report TR 25.950 beschriebenen Verfahren und Techniken vorausgesetzt, daß die zu übertragenen Nutzdatenpakete, die im allgemeinen von einer Applikation im Festnetzwerk CN oder von einem Radio Network Controller RNC erzeugt werden, von einem Node B zu einem Teilnehmer-Endgerät UE übertragen werden.

Bei dem N-Channel S&W ARQ Verfahren werden die Sendedatenpakete SDP im allgemeinen über einen einzigen physikalischen Datenübertragungskanal gesendet. Dieser ist jedoch zeitlich in mehrere, genauer in N Unterkanäle bzw. Sub-Channel SC aufgeteilt. Dabei ist in der Sendeeinheit SU des Node B für jeden SC ein separater Sender Sᵢ und in einer Empfangseinheit RU des UE ein separater Empfänger Rᵢ vorhanden. Des weiteren ist für jeden SC ein eigener Rückkanal bzw. Reverse Channel RCi vorgesehen, über den das Übertragungsergebnis für das zuletzt über den SCi gesendete Datenpaket SDP von dem Empfänger Rᵢ zu dem entsprechenden Sender Sᵢ übermittelt wird. Somit kann über jeden SCᵢ ein eigenständiger S&W ARQ Mechanismus durchgeführt werden, wobei die einzelnen SCs zeitlich multiplext über den physikalischen Übertragungskanal gesendet werden. Der Vorteil dieses Verfahrens liegt darin, daß in dem Zeitraum, in dem ein Sender auf das Übertragungsergebnis eines gesendeten Datenpakets vom entsprechenden Empfänger wartet, der Übertragungskanal nicht ungenutzt bleibt, sonder weitere Datenpaket über die übrigen SC gesendet werden können. Somit nutzt dieses Verfahren die Übertragungskapazitäten des Übertragungskanals vollständig aus.

In der Abbildung von Fig. 2 ist das N-Channel S&W ARQ Verfahren schematisch für N=4 SCs dargestellt. Die zu sendenden Datenpakete, die über die I_{ub} Schnittstelle vom RNC zum Node B gelangen, werden zunächst ihrer Sendereihenfolge nach in einem Speicher der Sendeeinheit im Node B gespeichert. Dieser Speicher FIFO ist nach einem first in-first out Mechanismus organisiert und wird im allgemeinen als Stapelspeicher bezeichnet. Auf den Speicher FIFO hat ein sogenannter Vierkanalsequenzer SEQ Zugriff, welcher dem Speicher die Sendedatenpakete nur in der entsprechenden Sendereihenfolge entnehmen kann. Für jedes Übertragungsintervall bzw. Transmission Time Intervall TTI, in dem ein Sendedatenpaket übertragen werden soll, entnimmt der Vierkanalsequenzer SEQ dem Speicher FIFO ein Sendedatenpaket und übergibt dies sequentiell einem der vier Sender S₁-S₄. D.h. für das TTI 1 bekommt der Sender S₁ ein Sendedatenpaket übergeben, für das TTI 2 der Sender S₂, usw. Nach dem TTI 4 beginnt die Sequenz dann wieder bei dem Sender S₁.

Jeder Sender Sᵢ hat nach dem Erhalt eines Sendedatenpakets vom Vierkanalsequenzer SEQ die Aufgabe dieses zum entsprechenden Empfänger zu senden. Dabei können die einzelnen Sender Sᵢ nur zeitlich nacheinander auf den physikalischen Übertragungskanal zugreifen. D.h. im ersten TTI darf nur der Sender S₁ Daten über den Übertragungskanal senden, im zweiten TTI nur der Sender S₂, usw. Somit ist jeder Sender nur jedes vierte Übertragungsintervall dazu berechtigt Daten über den physikalischen Kanal zu übertragen, wobei die Übertragungskapazitäten des Übertragungskanals jedoch in Summe vollständig ausgenutzt werden. Wurde im Empfänger dabei ein gesendetes Datenpaket fehlerfrei empfangen, übergibt er dieses Empfangsdatenpaket ohne es in irgendeiner Weise zwischen zu speichern sofort zur weiteren Verarbeitung der nächsten Einheit im UE und sendet auf dem RC das positive Ergebnis der Übertragung zum Sender.

Erreicht den Empfänger hingegen ein fehlerhaftes Datenpaket, so übergibt er das Datenpaket nicht der nächsten Verarbeitungseinheit im UE, sonder er zerstört es, HARQ Type. Es besteht auch die Möglichkeit einer Zwischenspeicherung des fehlerhaften Datenpakets, HARQ Type II/III, wobei ein negatives Übertragungsergebnis für das Datenpaket über den RC zum Sender übertragen wird.

Ein Sender Sᵢ, den ein negatives Übertragungsergebnis für ein zuvor gesendetes Datenpaket über den RC erreicht, überträgt eine Kopie des originalen Sendedatenpakets aus einem zugeordneten temporären Speicher TMᵢ zum Empfänger, d.h. der Sender führt eine sogenannte Retransmission durch. Eine solche Retransmission eines Sendedatenpaktes SDPⱼ kann der Sender dabei jedoch nicht sofort ausführen. Er muß vielmehr warten, bis er wieder berechtigt ist auf den physikalischen Übertragungskanal zuzugreifen. Der Sender nimmt dabei solange Retransmissionen für ein Datenpaket vor, bis dieses entweder fehlerfrei beim Empfänger empfangen oder eine maximale Anzahl R von Retransmissionen erreicht wurde, wobei diese maximale Anzahl der Sendeeinheit im Node B und der Empfangseinheit im UE während der Konfiguration durch eine Einheit im RNC mitgeteilt wurde.

Damit der Sender Retransmissionen für ein Datenpaket durchführen kann, ist dabei zum einen gewährleistet, daß im Sender solange eine Kopie des originalen Sendedatenpakets vorhanden bzw. im TMᵢ gespeichert ist, bis es entweder erfolgreich übertragen oder die maximale Anzahl von Retransmissionen erreicht wurde. Erreicht der Sender die maximale Anzahl von Retransmissionen und das Sendedatenpaket konnte dabei noch nicht erfolgreich übertragen werden, wird der Versuch einer erfolgreichen Übertragung aufgegeben. Die Kopie des Sendedatenpakets SDPⱼ wird aus dem Speicher des Senders gelöscht. Im nächsten TTI, in dem der Sender wieder berechtigt ist Daten zu übertragen, erhält der Sender zur Übertragung dann ein neues Datenpaket, das er wiederum vom Vierkanalsequenzer SEQ übermittelt bekommen hat. Zum anderen muß gewährleistet sein, daß der Vierkanalsequenzer SEQ dem Sender für das entsprechende TTI, in dem er wieder berechtigt ist auf den physikalischen Kanal zuzugreifen und in dem er eine Retransmission durchführen will, kein neues Datenpaket übergibt. Das neue Sendedatenpaket muß der Vierkanalsequenzer SEQ im darauf folgenden TTI dem nächsten Sender übergeben, sofern dieser nicht ebenfalls eine Retransmission für ein zuvor von ihm gesendetes Datenpaket durchzuführen hat. D.h. wenn der Sender S₁ z.B. eine Retransmission durchführen muß, bekommt er für das TTI, in dem er wieder berechtigt ist auf den Datenübertragungskanal zuzugreifen, kein neues Sendedatenpaket vom Vierkanalsequenzer SEQ übergeben. Erst im darauf folgenden TTI bekommt der Sender S₂ dann das neue Sendedatenpaket vom Vierkanalsequenzer SEQ übergeben, wenn voraus gesetzt wird, daß der Sender S₂ in diesem TTI keine Retransmission durchzuführen braucht.

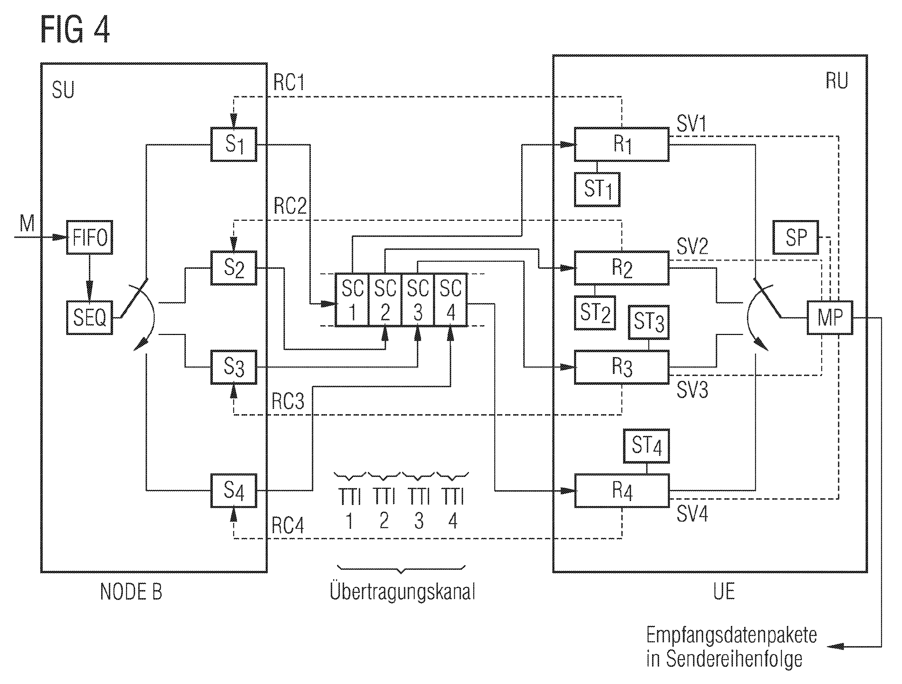

Bei dem zuvor beschriebenen N-Channel S&W ARQ Verfahren tritt das Problem auf, daß sich die Reihenfolge der Sendedatenpaketen, in der sie im Stapelspeicher abgelegt sind, und in der sie übertragen werden sollen, im Empfänger verändert. Dies läßt sich an dem folgenden Beispiel zeigen, dem die Abbildung von Fig. 2 zugrunde liegt und das in dem Ablaufdiagramm von Fig. 3 dargestellt ist. Der Vierkanalsequenzer SEQ übergibt für die ersten vier TTIs jedem Sender Sᵢ ein Sendedatenpaket SDP. Dabei bekommt der Sender S₁ sinnvoller Weise das Datenpaket SDP 1 aus dem Stapelspeicher übergeben, der Sender S₂ das Datenpaket SDP 2, usw. Somit sind die Sendedatenpakete ihrer Sendereihenfolge nach auf die einzelnen SCs aufgeteilt. Bekommt der Sender S₁ nun über den RC 1 ein negatives Übertragungsergebnis für das im TTI 1 erstmals gesendete Datenpaket, so führt er im TTI 5, in dem er wieder berechtigt ist auf den Übertragungskanal zuzugreifen, eine Retransmission durch. Davon ausgehend, daß die in den TTIs 2, 3 und 4 übertragenen Sendedatenpakete fehlerfrei über die SCs 2, 3 und 4 übertragen wurden, und diese demnach sofort zur weiteren Verarbeitung der nächsten Einheit im UE übergeben worden sind, hat sich die Empfangsreihenfolge der Sendedatenpakete geändert, was anhand der rechten Spalte von Abbildung 3 zu erkennen ist.

Eine solche Veränderung der Sendereihenfolge von Sendedatenpaketen tritt schon bei einer einzigen fehlerhaften Übertragung auf, die zudem innerhalb nur einer Retransmission behoben werden konnte. Die Veränderung der Sendereihenfolge von Sendedatenpaketen SDP kann im UE unter Umständen dazu führen, daß Datenpakte, die nicht in der richtigen Reihenfolge empfangen werden, als Übertragungsfehlern interpretiert und daraufhin im UE zerstört werden. Nach Klärung der Übertragungssituation eines ausstehenden Sendedatenpakets wird die Übertragung nachfolgender Sendedatenpakete in korrekter Sendereihenfolge erneut beim Sender angefordert. Damit wird der Übertragungskanal sehr stark durch Mehrfachübersendungen der gleichen Sendedatenpakete belastet.

Dem in der Abbildung von Fig. 4 als eine Abhilfe skizzierten erfindungsgemäßen Ausführungsbeispiel liegt wiederum eine Mobilfunkarchitektur nach Abbildung 1 und ein 4-Channel S&W ARQ Verfahren zugrunde. Ferner sei vorausgesetzt, daß bei der Konfiguration der Mobilfunkverbindung beim Node B sowie beim UE eine maximale Anzahl R von drei Retransmissions-Versuchen eingestellt wurde.

In der Empfangseinheit im Mobilfunkgerät ist nach Abbildung 4 ein Multiplexer MP vorhanden, der im allgemeinen sequentiell die fehlerfrei empfangene Datenpakete SDP von den vier Empfängern R₁,R₂,R₃,R₄ abtransportiert und der nächsten Einheit im UE zur weiteren Verarbeitung übergibt. Damit entspricht die Sendeeinheit SU von Fig. 4 der von Fig. 2 und ist nur aus Gründen der Übersichtlichkeit vereinfacht dargestellt worden.

Erfindungsgemäße Unterschiede treten in der Empfangseinheit RU auf, die daher nun detailliert beschrieben wird. Vorab soll jedoch festgestellt werden, daß sich diese Unterschiede nur im Fall mindestens einer fehlerhaften Übertragung eines Sendedatenpaketes SDP bemerkbar machen. Im störungsfreien Normalbetrieb verhält sich auch die Empfangseinheit nach Fig. 4 so wie die in Fig. 2 dargestellte bekannte Empfangseinheit. Der Multiplexer MP hat in der Ausführungsform von Fig. 4 jederzeit Zugriff auf einen Speicher SP, in dem er Informationen zwischenspeichert, die er während der Dauer einer Verbindung von den einzelnen Empfänger R₁,R₂,R₃,R₄ übermittelt bekommen hat, und mit deren Hilfe er die Sendedatenpakete SDP in der richtigen Reihenfolge von den Empfängern R₁,R₂,R₃,R₄ abtransportieren kann, sofern ein einfacher sequentieller Abtransport der Datenpakete SDP nicht möglich ist. Dies ist in der Regel immer dann der Fall, wenn eine fehlerhafte Übertragung mindestens eines Datenpaketes vorliegt und demzufolge mindestens ein Retransmissionsvorgang läuft. Ferner hat jeder Empfänger R₁,R₂,R₃,R₄ Zugriff auf einen eigenen Stapelspeicher ST₁- ST₄ und es ist von jedem Empfänger eine separate Signalisierungsverbindung SV1-SV4 zu dem Multiplexer MP vorhanden, über die die Empfänger R₁,R₂,R₃,R₄ dem Multiplexer MP unter anderem mitteilen, ob die maximale Anzahl R von Retransmissionen für ein bestimmtes, zuvor fehlerhaft übertragenes Datenpaket SDPⱼ erreicht wurde, und somit das Datenpaket SDPⱼ als endgültig nicht erfolgreich übertragen kennzeichnet wird.

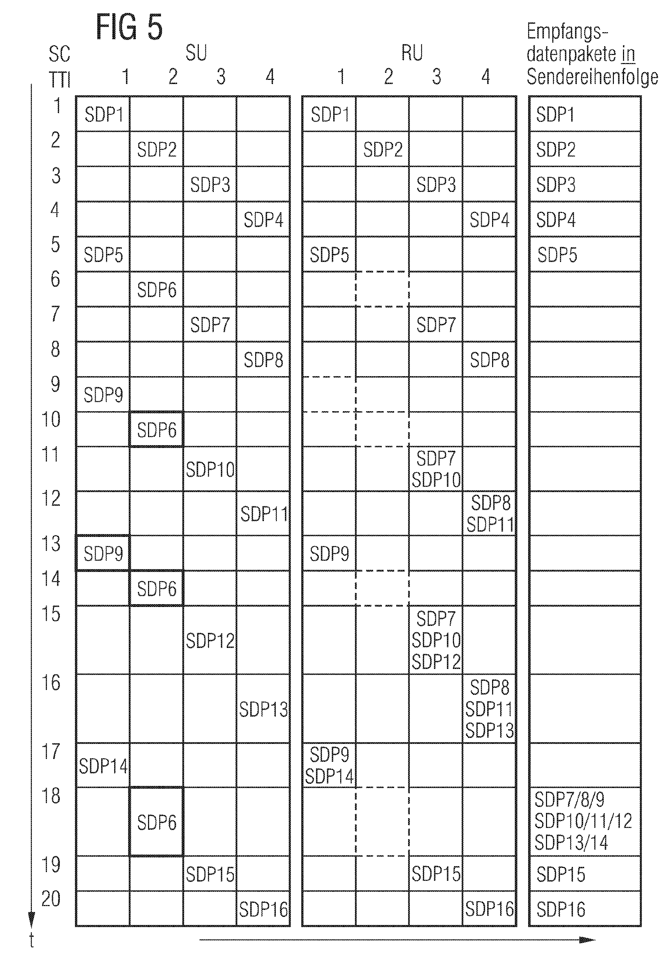

Anhand der Abbildung von Fig. 5 soll im folgenden dargestellt werden, wie die Sendereihenfolge von Sendedatenpaketen SDP in der Empfängereinheit RU als Teil des Teilnehmer-Endgerätes UE ermittelt bzw. wieder hergestellt werden kann, ohne dabei eine Sequenznummer für die übertragenen Datenpaket SDP einzuführen. Die Numerierung der SDPᵢ ist nur aus Gründen der Anschaulichkeit vorgenommen worden.

In der Darstellung von Fig. 5 ist beispielhaft der zeitliche Ablauf einer Datenübertragung zwischen Node B und UE dargestellt. Dabei ist vertikal die Zeit in TTIs aufgetragen, und horizontal sind die vier Sender, die vier Empfänger, deren Verbindung natürlich jeweils die vier SCs darstellen, sowie der Ausgang des Multiplexers MP dargestellt. Ferner stellt auf der Senderseite ein dick umrandetes Feld eine Retransmission dar. Auf der Empfängerseite kennzeichnet ein gestrichelt umrandetes Feld ein nicht fehlerfrei empfangenes Sendedatenpaket SDPⱼ.

Im TTI 1 sendet der Sender S₁ das SDP 1 zum Empfänger R₁. Dieser kann das Datenpaket fehlerfrei detektieren und stellt es dem Multiplexer MP direkt zum Abtransport zur Verfügung. Der Multiplexer MP überträgt das SDP1 dann zur nächsten Verarbeitungseinheit im UE. In den darauf folgenden TTIs werden die Datenpakete SDP 2, SDP 3, SDP 4 und SDP 5 jeweils von dem Sender S₂, Sender S₃, Sender S₄ und Sender S₁ zu den entsprechenden Empfängern Rᵢ übertragen, welche wiederum die Sendedatenpaket SDPᵢ fehlerfrei detektieren können und somit der Multiplexer diese der Reihenfolge nach der nächsten Verarbeitungseinheit des UEs übergibt. Somit findet in den ersten fünf TTIs eine ideale Übertragung statt, in der kein Sender eine Retransmission für ein Sendedatenpaket durchführen muß.

Wie der Abbildung von Fig. 5 unter Berücksichtigung der Fig. 4 zu entnehmen ist, wurden dabei die Sendedatenpakete SDPᵢ in der richtigen Reihenfolge der nächsten Verarbeitungseinheit im UE übergeben. Im TTI 6 kann der Empfänger R₂ das Datenpaket SDP 6 nicht fehlerfrei detektieren. Somit muß der Multiplexer MP warten, bis der Empfänger R₂ ihm das Datenpaket SDP 6 zum Abtransport zur Verfügung stellt. Der nächste Übertragungsversuch findet dabei aber, wie schon im Stand der Technik beschrieben, erst vier TTIs später statt, also im TTI 10. Die anderen Sender übertragen in der Zwischenzeit die nächsten Sendedatenpakete zu den entsprechenden Empfängern. Somit erhält Empfänger R₃ SDP 7, Empfänger R₄ SDP 8 und Empfänger R₁ sollte SDP 9 empfangen, wobei dieses Datenpaket jedoch beispielhaft ebenfalls nicht vom Empfänger R₁ fehlerfrei detektiert werden konnte. Da der Multiplexer auf das Datenpaket SDP 6 vom Empfänger R₂ wartet, werden die Datenpakete SDP 7 und SDP 8 in den entsprechenden Empfängern in einem Stapelspeicher zwischengespeichert, nicht vom Multiplexer MP abtransportiert und damit auch nicht der nächsten Verarbeitungseinheit im UE übergeben. Empfänger R₃ und Empfänger R₄ teilen dem Multiplexer dabei über ihre entsprechenden Signalisierungsverbindungen SV3, SV4 mit, daß sie in ihren entsprechenden TTIs ein fehlerfreies Sendedatenpaket empfangen haben, und der Empfänger R₁ teilt dem Multiplexer MP mit, daß er in seinem TTI kein fehlerfreies Sendedatenpaket erhalten hat. Der Multiplexer speichert diese Information in dem Speicher SP zwischen, damit er nach dem Empfang des Datenpakets SDP 6 die zwischenzeitlich über die restlichen SCs empfangenen Sendedatenpakete in der richtigen Reihenfolge von den Empfängern 1, 3 und 4 abtransportieren kann.

Die Nachricht, die ein Empfänger Rᵢ über die Signalisierungsverbindung SVᵢ zum Multiplexer MP übermittelt, kann dabei im einfachsten Fall aus zwei Bits bestehen. Das erste Bit kann dabei z.B. anzeigen welche Art von Information die Nachricht enthält. Es sind im allgemeinen nämlich zwei Arten von Nachrichten zu unterscheiden, die ein ein Empfänger Rᵢ über die Signalisierungsverbindung SVᵢ zum Multiplexer MP senden kann. Einmal kann ein Empfänger Rᵢ, auf den der Multiplexer MP gerade wartet, um von ihm das nächste Datenpaket abtransportieren zu können, dem Multiplexer MP mitteilen, daß die maximale Anzahl R von Retransmissionen für das Sendedatenpaket SDPⱼ erreicht wurde, und der Empfänger Rᵢ somit das Datenpaket mit einer solchen Nachricht als endgültig nicht erfolgreich übertragen markiert. Ein anderes mal kann ein Empfänger Rᵢ, der in dem Zeitraum, in dem der Multiplexer MP auf ein bestimmtes Sendedatenpaket von einem bestimmten Empfänger Rⱼ wartet, weitere Sendedatenpakete empfängt, dem Multiplexer MP das Übertragungsergebnis für diese Sendedatenpaket mitteilen. Dabei dient das zweite Bit für den zuletzt genannten Fall zur Signalisierung, ob ein Datenpaket SDPᵢ erfolgreich detektiert werden konnte oder nicht.

Im TTI 10 überträgt der Sender S₂ die erste Retransmisson von SDP 6, die wiederum nicht im Empfänger R₂ fehlerfrei detektiert werden kann. Somit muß der Multiplexer MP wiederum vier TTIs auf den nächsten Übertragungsversuch warten. In der Zwischenzeit erhält Empfänger R₃ SDP 10, Empfänger R₄ SDP 11 und der Empfänger R₁ erhält die erste Retransmission von SDP 9. Die drei Empfänger R₁, R₃ und R₄ speichern die empfangenen SDPs wieder in ihren Stapelspeichern zwischen und senden eine entsprechende Nachricht über das Übertragungsergebnis für die Sendedatenpakete zum Multiplexer MP, der diese Information wiederum in SP speichert.

Die nächsten zwei Übertragungsversuche für das Datenpaket SDP 6 sind in diesem Beispiel wiederum nicht erfolgreich, wie es Abbildung 5 zu entnehmen ist. Somit ist für das Datenpaket SDP 6 die maximale Anzahl von Retransmissionen erreicht. Zu diesem Zeitpunkt sind in den Stapelspeicher von Empfänger R₃ die Datenpakete SDP 7, SDP 10 und SDP 12 und im Stapelspeicher von Empfänger R₄ die Datenpakete SDP 8, SDP 11 und SDP 13 sowie im Stapelspeicher von Empfänger R₁ die Datenpakete SDP 9 und SDP 14 vorhanden. Nachdem der Empfänger R₂ dem Multiplexer MP die Nachricht übermittelt hat, daß für das Datenpaket SDP 6 die maximale Anzahl von Retransmissionen erreicht wurde, wartet er nicht mehr auf das Datenpaket, sondern transportiert die Datenpakete SDP 7 bis SDP 14 in der richtigen Reihenfolge von Empfängern R₁, R₃ und R₄ ab. Diese übergibt er der nächsten Einheit im UE zur weiteren Verarbeitung. Dabei kann der Multiplexer MP von den einzelnen Empfängern Rᵢ die Sendedatenpaket in diesem Fall nicht sequentiell abtransportieren, da nicht gewährleistet werden kann, daß die Sendedatenpakete ihrer Reihenfolge nach in den einzelnen Empfänger Rᵢ vorhanden sind. Dies ist anhand des Empfängers R₁ gut zu erkennen. Dadurch, daß dieser zwischenzeitlich eine Retransmission durchzuführen hatte, enthält dessen Stapelspeicher die Datenpakete SDP 9 und SDP 14. Würde der Multiplexer im achtzehnten TTI die Sendedatenpaket in drei sequentiellen Durchläufen von den Empfängern R₁, R₃ und R₄ in der genannten Reihenfolge abtransportieren, so wäre die Reihenfolge der an die nächste Verarbeitungseinheit übergebenen Datenpakete SDP 7, SDP 8, SDP 9, SDP 10, SDP 11, SDP 14, SDP 12 und SDP 13. Somit würden die Sendedatenpakete nicht in der entsprechenden Reihenfolge der nächsten Einheit im UE übergeben werden. Aus diesem Grund kann der Multiplexer die in der Zeit, in der er auf das Datenpaket SDP 6 vom Empfänger R₂ gewartet hat, von den restlichen Empfängern gesammelten Informationen über die in diesem Zeitraum von ihnen empfangenen Sendedatenpakete auswerten. Mit diesen Informationen und einer entsprechenden Kombinationslogik kann der Multiplexer MP ermitteln, das er beim Abtransport der Sendedatenpakete den Empfänger R₁ beim zweiten Durchlauf überspringen muß. Somit werden im TTI 18 die Sendedatenpakete in der in Abbildung 5 dargestellten Reihenfolge der nächsten Verarbeitungseinheit im UE übergeben. In den nachfolgenden TTIs kann dann wieder eine "normale" Übertragung stattfinden, d.h. der Multiplexer MP braucht nicht auf ein bestimmtes Datenpaket von einem Empfänger zu warten und die restlichen Empfänger brauchen keine Datenpakete in ihren Stapelspeichern zwischenzuspeichern, solange nicht wieder über einen oder mehrere SCs Retransmissionen ausgeführt werden müssen.

Kern der vorstehend dargestellten Ausführungsform erfindungsgemäßen ist somit, daß alle Empfänger eines N-Channel S&W ARQ Verfahrens innerhalb eines Mobilfunkendgerätes, insbesondere eines Mobilfunkendgerätes nach dem UMTS Standard, ihre fehlerfrei empfangenen Datenpakete nicht sofort nach dem Empfang an die nächste Verarbeitungseinheit im Mobilfunkendgerät übergeben, sondern solange mit der Weitergabe eines Datenpakets warten, bis alle Datenpakete, die in der Sendereihenfolge vor dem empfangenen Datenpaket liegen, erfolgreich empfangen und der nächsten Einheit übergeben wurden oder als endgültig nicht erfolgreich übertragen gekennzeichnet wurden. Dabei soll die Reihenfolge der Sendedatenpakete im Empfänger zum einem durch die SCs, über die in einer gewissen Sendereihenfolge übertragen wird, und zum anderen durch zusätzliche Informationen, die in einer Speichereinheit im Empfänger zwischengespeichert werden, ermittelt bzw. wieder hergestellt werden.

Dieses Vorgehen hat den Vorteil, daß die empfangenen Datenpakete ihrer Sendereihenfolge nach der nächsten Verarbeitungseinheit im Mobilfunkendgerät übergeben werden, und somit keine Datenpakete, die außerhalb einer bestimmten Reihenfolge empfangen wurden, in einem Mobilfunkendgerät zu Übertragungsfehlern führen bzw. als solche gewertet werden und daher zerstört werden.

Ein weiterer Vorteil ist, daß den Sendedatenpaketen keine Sequenznummer angehängt zu werden braucht, um ihre Sendereihenfolge im Empfänger ermitteln zu können, und somit eine solche Sequenznummer auch nicht zum Empfänger übertragen wird. Dadurch werden keine Übertragungskapazitäten für die Übertragung einer Sequenznummer verschwendet. Damit wird der Verarbeitungsaufwand und Overhead zur Datenerzeugung und Verwaltung auch auf der Senderseite vorteilhaft gemindert.

Aufgrund der Senkung eines für Retransmissions-Vorgänge erforderlichen Datenverkehrs Sender und Empfänger kann ein erfindungsgemäßes System mit einem vorstehend beschriebenen Verfahren an Standards diverser Kommunikationssysteme angepaßt werden. Auch wenn ein Einsatz in einem UMTS-System sehr detailliert dargestellt worden ist wird also ein vorteilhafter Einsatz in sonstigen Anwendungen nicht ausgeschlossen, beispielsweise für eine Übertragung von IP-Paketen aus dem Internet oder einem Intranet.

## Patentansprüche

1. Verfahren zum Übersenden einer Information (M),
in dem die Information (M) in mehrere Sendedatenpakete (SDP) aufgeteilt und über einen oder mehrere Kanäle (SC) von Sendern (Sᵢ) einer Sendeeinheit (SU) an Empfänger (Rᵢ) einer Empfangseinheit (RU) übersandt wird, wobei die Empfänger (Rᵢ) mit den zugehörigen Sendern (Sᵢ) über einen Rückkanal (RCᵢ) verbunden sind, um bei fehlerhafter Übertragung eines jeweiligen Sendedatenpaketes (SDPⱼ) eine erneute Übersendung anzufordern,
**dadurch gekennzeichnet,**
**daß** die Sendedatenpakete (SDP) bei der Empfangseinheit (RU) solange zwischengespeichert werden, bis alle Sendedatenpakete (SDP), die vor einem jeweiligen noch zu empfangenen Sendedatenpaket (SDPⱼ) liegen, erfolgreich empfangen worden sind.

2. Verfahren nach Anspruch 1,
**dadurch gekennzeichnet,**
**daß** die Sendedatenpakete (SDP) unter Adressen gespeichert werden, die mit einer zeitlichen Abfolge von Empfängern durch eine interne Zuordnung verknüpft werden, so daß ein Auslesen von Sendedatenpaketen (SDP) in korrekter zeitlicher Reihenfolge erfolgt, insbesondere automatisch in sequentieller Form.

3. Verfahren nach Anspruch 1 und 2
**dadurch gekennzeichnet,**
**daß** die zeitliche Abfolge der Sendedatenpaketen der Empfangseinheit durch eine Information mitgeteilt wird, die den Sendedatenpaketen beispielsweise in einem Kontrolldatenkopf vorangestellt wird, oder die der Empfangseinheit parallel zu den Sendedatenpaketen auf einen separaten Kanal übermittelt wird, so dass der Empfangseinheit die Möglichkeit zur Ermittlung von Fehlern im Übertragungsablauf gegeben wird.

4. Verfahren nach einem der beiden vorhergehenden Ansprüche,
**dadurch gekennzeichnet,**
**daß** die Sendedatenpakete (SDP) in Speichern (STᵢ) zwischengespeichert werden, die von den jeweiligen Empfängern (Rᵢ) als direkt zugeordnete Elemente der Empfangseinheit (RU) angesprochen werden.

5. Verfahren nach einem der vorhergehenden Ansprüche,
**dadurch gekennzeichnet,**
**daß** die Sendedatenpakete (SDP) nach einem erfolgreichen Empfang des noch zu empfangenen Sendedatenpaket (SDPⱼ) aus der Empfangseinheit (RU) ausgelesen und in ihrer korrekten, von der Sendeeinheit (SU) zeitlich vorgegebenen Reihenfolge in einer nachfolgenden Schaltung weiterverarbeitet werden.

6. Verfahren nach einem der vorhergehenden Ansprüche,
**dadurch gekennzeichnet,**
**daß** auch während einer Zeitspanne, bis zu einem erfolgreichen Empfang des noch zu empfangenen Sendedatenpaket (SDPⱼ) Sendedatenpakete (SDP) von den übrigen Empfängern (Rᵢ) empfangen und in den zugehörigen Speichern (STᵢ) abgelegt werden, oder in einer Zeitspanne überhaupt keine Daten empfangen werden, um einer Sendeeinheit die Möglichkeit zu geben zwischenzeitlich andere Empfangseinheiten mit Daten zu versorgen oder keine Daten zu senden.

7. Verfahren nach dem vorhergehenden Anspruch,
**dadurch gekennzeichnet,**
**daß** Informationen über die in den Speichern (STᵢ) jeweils abgelegten Sendedatenpakete (SDP) an einen Speicher (SP) versendet werden.

8. Verfahren nach einem der vorhergehenden Ansprüche,
**dadurch gekennzeichnet,**
**daß** der Speicher (SP) durch einen Multiplexer (MP) beschrieben und/oder ausgelesen wird.

9. Verfahren nach dem vorhergehenden Anspruch,
**dadurch gekennzeichnet,**
**daß** der Multiplexer (MP) die Speicher (STᵢ) unter Verwendung der Information aus dem Speicher (SP) zur Bildung eines sequentiellen Ausgangssignals (OUT) mit korrekter von der Sendeeinheit (SU) zeitlich vorgegebenen Reihenfolge der Sendedatenpakete (SDP) ausliest.

10. Verfahren nach einem der vorhergehenden Ansprüche 1, 3 und 6,
**dadurch gekennzeichnet,**
**daß** die Sendedatenpakete (SDP) in einem Speicher (ST) unter Organisation durch einen Multiplexer beschrieben und/oder ausgelesen werden.

11. Verfahren nach einem der vorhergehenden Ansprüche,
**dadurch gekennzeichnet,**
**daß** die Information (M) nach einem bekannten Mobilfunk-Standard übersandt wird, insbesondere nach dem UMTS-Standard.

12. Vorrichtung zum Übersenden einer Information (M), bei der Sender (Sᵢ) einer Sendeeinheit (SU) über einen Kanal oder mehrere Kanäle (SCi) mit Empfängern (Rᵢ) einer Empfangseinheit (RU) verbunden sind
wobei die Empfänger (Rᵢ) mit den zugehörigen Sendern (Sᵢ) über einen Rückkanal (RCᵢ) verbunden sind, der bei fehlerhafter Übertragung eines jeweiligen Sendedatenpaketes (SDPⱼ) zur Übersendung eines Signals zur Anforderung einer erneuten Übersendung ausgebildet ist,
**dadurch gekennzeichnet,**
**daß** bei der Empfangseinheit (RU) Mittel zur Zwischenspeicherung der Sendedatenpakete (SDP) in einem Maße vorgesehen sind, so daß die Mittel solange zur Speicherung von Sendedatenpaketen (SDP) ausgebildet sind, bis alle Sendedatenpakete (SDP), die vor einem jeweiligen noch zu empfangenen Sendedatenpaket (SDPⱼ) liegen, erfolgreich empfangen worden sind.

13. Vorrichtung nach dem vorhergehenden Anspruch,
**dadurch gekennzeichnet**,
Adressen der Mittel mit einer zeitlichen Abfolge von Empfängern durch eine interne Zuordnung verknüpft sind, so daß ein Auslesen von Sendedatenpaketen (SDP) in korrekter zeitlicher Reihenfolge erfolgt.

14. Vorrichtung nach einem der beiden vorhergehenden Ansprüche,
**dadurch gekennzeichnet,**
**daß** als Mittel Speicher (STᵢ) einem jeweiligen Empfänger (Rᵢ) zugeordnet sind.

15. Vorrichtung nach einem der vorhergehenden Ansprüche,
**dadurch gekennzeichnet,**
**daß** ein Speicher (SP) zur Aufnahme von Informationen über die in den Speichern (STᵢ) jeweils abgelegten Sendedatenpakete (SDP) vorgesehen ist.

16. Vorrichtung nach einem der vorhergehenden Ansprüche,
**dadurch gekennzeichnet,**
**daß** ein Multiplexer (MP) zum Beschrieben und/oder Ausgelesen des Speichers (SP) und der Speicher (STᵢ) vorgesehen ist.

17. Vorrichtung nach einem der vorhergehenden Ansprüche,
**dadurch gekennzeichnet,**
**daß** als Kanal zur Übersendung einer Information (M) mindestens abschnittsweise eine Mobilfunkverbindung vorgesehen ist.

18. Vorrichtung nach einem der vorhergehenden Ansprüche,
**dadurch gekennzeichnet,**
**daß** eine Empfangseinheit (RU) in Form eines mobilen Teilnehmer-Endgeräts (UE) eines zellularen Datenund/oder Kommunikationsnetzes ausgebildet ist, insbesondere ein Mobiltelefon bzw. Handy nach dem UMTS-Standard.

19. Teilnehmer-Endgerät für ein zellularen Daten- und/oder Kommunikationsnetz,
**dadurch gekennzeichnet,**
**daß** es eine Empfangseinheit (RU) umfaßt, das zur Umsetzung eines Verfahrens nach einem der Ansprüche 1 bis 10 ausgebildet ist und/oder mindestens Teile gemäß einer Vorrichtung nach einem der Ansprüche 11 bis 17 aufweist.

20. Kommunikationssystem zum Austausch von Daten in Form von Sendedatenpaketen (SDP) zwischen einer Sendeeinheit (SU) und einer Empfangseinheit (RU), die mindestens teilweise über eine Luftschnittstelle (Uu) miteinander verbunden sind,
**dadurch gekennzeichnet,**
**daß** das Kommunikationssystem eine Vorrichtung umfaßt, die gemäß einem der vorhergehenden Ansprüche 11 bis 17 und/oder zur Umsetzung eines Verfahrens nach einem der Ansprüche 1 bis 10 ausgebildet ist.

21. Kommunikationssystem nach dem vorhergehenden Anspruch,
**dadurch gekennzeichnet,**
**daß** die Sende- und/oder Empfangseinheit (SU, RU) als mobile Einheit ausgeführt ist, insbesondere als Mobiltelefon oder mobile Datenübertragungseinrichtung, vorzugsweise nach dem UMTS-Standard.
